(19) Europäisches Patentamt
European Patent Office
Office européen des brevets

(11) **EP 4 752 184 A1**

(12) **EUROPEAN PATENT APPLICATION**
published in accordance with Art. 153(4) EPC

(43) Date of publication:
**03.06.2026 Bulletin 2026/23**

(21) Application number: **24845555.2**

(22) Date of filing: **19.07.2024**

(51) International Patent Classification (IPC):
*C09J 7/38* (2018.01)     *C09J 7/20* (2018.01)
*C09J 11/06* (2006.01)    *C09J 11/08* (2006.01)
*C09J 133/00* (2006.01)   *C09J 133/04* (2006.01)
*C09J 133/06* (2006.01)

(52) Cooperative Patent Classification (CPC):
**C09J 7/20; C09J 7/38; C09J 11/06; C09J 11/08;
C09J 133/00; C09J 133/04; C09J 133/06**

(86) International application number:
**PCT/JP2024/025963**

(87) International publication number:
**WO 2025/023178 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.07.2023   JP 2023120963
25.07.2023   JP 2023120964**

(71) Applicant: Sekisui Chemical Co., Ltd.
**Osaka-shi, Osaka 530-8565 (JP)**

(72) Inventors:
• **TANIMOTO, Takayuki
Mishima-gun, Osaka 618-0021 (JP)**
• **OGATA, Nagisa
Mishima-gun, Osaka 618-0021 (JP)**
• **OGATA, Yudai
Mishima-gun, Osaka 618-0021 (JP)**
• **ICHIKAWA, Hiroto
Mishima-gun, Osaka 618-0021 (JP)**

(74) Representative: **Cabinet Beau de Loménie
103, rue de Grenelle / CS 90800
75340 Paris Cedex 07 (FR)**

(54) **ADHESIVE TAPE AND ADHESIVE COMPOSITION**

(57)     The present invention aims to provide an adhesive tape having excellent adhesion under high-temperature conditions. The present invention also aims to provide an adhesive composition having excellent adhesion under high-temperature conditions. Provided is an adhesive tape including an adhesive layer, the adhesive layer containing an acrylic copolymer, the adhesive layer having a shear storage modulus at 150°C of $8.0 \times 10^4$ Pa or greater and $3.0 \times 10^5$ Pa or less as measured by dynamic viscoelasticity measurement at a measurement frequency of 1 Hz and having a loss tangent (tan$\delta$) at 150°C of 0.10 or greater and 0.40 or less as measured by dynamic viscoelasticity measurement at a measurement frequency of 1 Hz.

**Description**

TECHNICAL FIELD

The present invention relates to adhesive tapes. The present invention also relates to adhesive compositions.

BACKGROUND ART

Adhesive tapes including an adhesive layer containing an adhesive have been widely used to fix components in electronic devices, vehicles, houses, and building materials (see Patent Literatures 1 to 3, for example). Specifically, for example, adhesive tapes are used to bond a cover panel for protecting a surface of a portable electronic device to a touch panel module or display panel module, or to bond a touch panel module to a display panel module.

CITATION LIST

- Patent Literature

Patent Literature 1: JP 2015-052050 A
Patent Literature 2: JP 2015-021067 A
Patent Literature 3: JP 2015-120876 A

SUMMARY OF INVENTION

- Technical problem

There has been a growing demand for heat resistance in adhesive tapes used for fixing electronic device components or in-vehicle components. In recent years, adhesive strength at high temperatures approaching 100°C has been demanded. However, conventional adhesive tapes may not provide sufficient adhesive strength under high-temperature conditions because of a decrease in cohesion of the adhesive layer.
The present invention aims to provide an adhesive tape having excellent adhesion under high-temperature conditions. The present invention also aims to provide an adhesive composition having excellent adhesion under high-temperature conditions.

- Solution to problem

The disclosure 1 relates to an adhesive tape including an adhesive layer, the adhesive layer containing an acrylic copolymer, the adhesive layer having a shear storage modulus at 150°C of $8.0 \times 10^4$ Pa or greater and $3.0 \times 10^5$ Pa or less as measured by dynamic viscoelasticity measurement at a measurement frequency of 1 Hz and having a loss tangent (tan$\delta$) at 150°C of 0.10 or greater and 0.40 or less as measured by dynamic viscoelasticity measurement at a measurement frequency of 1 Hz.
The disclosure 2 relates to the adhesive tape according to the disclosure 1, wherein the acrylic copolymer includes a structural unit derived from an alkyl (meth)acrylate, the structural unit derived from an alkyl (meth)acrylate includes a structural unit derived from an alkyl (meth)acrylate containing an alcohol-derived C1-C4 alkyl group, the structural unit derived from an alkyl (meth)acrylate containing an alcohol-derived C1-C4 alkyl group is included in a proportion of 50% by mass or more and 100% by mass or less in the structural unit derived from an alkyl (meth)acrylate, and the structural unit derived from an alkyl (meth)acrylate is included in a proportion of 50% by mass or more and 90% by mass or less in the acrylic copolymer.
The disclosure 3 relates to the adhesive tape according to the disclosure 2, wherein the structural unit derived from an alkyl (meth)acrylate includes a structural unit derived from an alkyl (meth)acrylate containing an alcohol-derived C1-C2 alkyl group, and the structural unit derived from an alkyl (meth)acrylate containing an alcohol-derived C1-C2 alkyl group is included in a proportion of 10% by mass or more and 80% by mass or less in the structural unit derived from an alkyl (meth)acrylate.
The disclosure 4 relates to the adhesive tape according to the disclosure 1, 2, or 3, wherein the acrylic copolymer includes a structural unit derived from a monomer containing a polar functional group, and the structural unit derived from a monomer containing a polar functional group is included in a proportion of 3% by mass or more and 15% by mass or less in the acrylic copolymer.

The disclosure 5 relates to the adhesive tape according to the disclosure 4, wherein the structural unit derived from a monomer containing a polar functional group includes at least one structural unit selected from the group consisting of a structural unit derived from a carboxy group-containing monomer and a structural unit derived from a hydroxy group-containing monomer.

The disclosure 6 relates to the adhesive tape according to the disclosure 1, 2, 3, 4, or 5, wherein the acrylic copolymer includes a structural unit derived from an olefin copolymer having a polymerizable unsaturated double bond at an end.

The disclosure 7 relates to the adhesive tape according to the disclosure 6, wherein the structural unit derived from an olefin copolymer having a polymerizable unsaturated double bond at an end is included in a proportion of 5% by mass or more and 50% by mass or less in the acrylic copolymer.

The disclosure 8 relates to the adhesive tape according to the disclosure 1, 2, 3, 4, 5, 6, or 7, wherein the acrylic copolymer has a weight average molecular weight of 750,000 or greater and less than 1,500,000.

The disclosure 9 relates to the adhesive tape according to the disclosure 1, 2, 3, 4, 5, 6, 7, or 8, wherein the adhesive layer further contains a silane coupling agent.

The disclosure 10 relates to the adhesive tape according to the disclosure 9, wherein the silane coupling agent is contained in an amount of 0.1 parts by mass or more and 3.0 parts by mass or less relative to 100 parts by mass of the acrylic copolymer.

The disclosure 11 relates to the adhesive tape according to the disclosure 1, 2, 3, 4, 5, 6, 7, 8, 9, or 10, wherein the adhesive layer further contains a tackifier resin.

The disclosure 12 relates to the adhesive tape according to the disclosure 11, wherein the tackifier resin includes at least one selected from the group consisting of a terpene phenol resin, a rosin resin, and a xylene resin.

The disclosure 13 relates to the adhesive tape according to the disclosure 11 or 12, wherein the tackifier resin is contained in an amount of 20 parts by mass or less relative to 100 parts by mass of the acrylic copolymer.

The disclosure 14 relates to the adhesive tape according to the disclosure 1, 2, 3, 4, 5, 6, 7, 8, 9, 10, 11, 12, or 13, wherein the adhesive layer has a gel fraction of 10% by mass or greater and 85% by mass or less.

The disclosure 15 relates to the adhesive tape according to the disclosure 1, 2, 3, 4, 5, 6, 7, 8, 9, 10, 11, 12, 13, or 14, wherein the adhesive layer has a thickness of 5 $\mu$m or greater and 200 $\mu$m or less.

The disclosure 16 relates to the adhesive tape according to the disclosure 1, 2, 3, 4, 5, 6, 7, 8, 9, 10, 11, 12, 13, 14, or 15, including a substrate.

The disclosure 17 relates to the adhesive tape according to the disclosure 16, wherein the substrate includes at least one selected from the group consisting of a non-woven fabric, a polyester film, a polyimide film, a polyamide film, a polyetheretherketone film, a polyphenylene ether film, and a polyphenylene sulfide film.

The disclosure 18 relates to the adhesive tape according to the disclosure 1, 2, 3, 4, 5, 6, 7, 8, 9, 10, 11, 12, 13, 14, 15, 16, or 17, wherein the adhesive tape has a total thickness of 50 $\mu$m or greater and 200 $\mu$m or less.

The disclosure 19 relates to the adhesive tape according to the disclosure 1, 2, 3, 4, 5, 6, 7, 8, 9, 10, 11, 12, 13, 14, 15, 16, 17, or 18, which is used for fixing an electronic device component or an in-vehicle component.

The disclosure 20 relates to an adhesive tape including an adhesive layer, the adhesive layer containing an acrylic copolymer including a structural unit derived from an alkyl (meth)acrylate, a structural unit derived from an olefin copolymer having a polymerizable unsaturated double bond at an end, and a structural unit derived from a monomer containing a polar functional group, the structural unit derived from an alkyl (meth)acrylate including a structural unit derived from an alkyl (meth)acrylate containing an alcohol-derived C1-C4 alkyl group, the structural unit derived from an alkyl (meth)acrylate containing an alcohol-derived C1-C4 alkyl group being included in a proportion of 50% by mass or more and 100% by mass or less in the structural unit derived from an alkyl (meth)acrylate, the structural unit derived from an alkyl (meth)acrylate being included in a proportion of 50% by mass or more and 90% by mass or less in the acrylic copolymer, the structural unit derived from a monomer containing a polar functional group being included in a proportion of 3% by mass or more and 15% by mass or less in the acrylic copolymer, the acrylic copolymer having a weight average molecular weight of 750,000 or greater and less than 1,500,000.

The disclosure 21 relates to the adhesive tape according to the disclosure 20, wherein the structural unit derived from an alkyl (meth)acrylate includes a structural unit derived from an alkyl (meth)acrylate containing an alcohol-derived C1-C2 alkyl group, and the structural unit derived from an alkyl (meth)acrylate containing an alcohol-derived C1-C2 alkyl group is included in a proportion of 10% by mass or more and 80% by mass or less in the structural unit derived from an alkyl (meth)acrylate.

The disclosure 22 relates to the adhesive tape according to the disclosure 20 or 21, wherein the structural unit derived from a monomer containing a polar functional group includes at least one selected from the group consisting of a structural unit derived from a carboxy group-containing monomer and a structural unit derived from a hydroxy group-containing monomer.

The disclosure 23 relates to the adhesive tape according to the disclosure 20, 21, or 22, wherein the structural unit derived from an olefin copolymer having a polymerizable unsaturated double bond at an end is included in a proportion of 5% by mass or more and 50% by mass or less in the acrylic copolymer.

The disclosure 24 relates to the adhesive tape according to the disclosure 20, 21, 22, or 23, wherein the adhesive layer further contains a silane coupling agent.

The disclosure 25 relates to the adhesive tape according to the disclosure 24, wherein the silane coupling agent is contained in an amount of 0.1 parts by mass or more and 3.0 parts by mass or less relative to 100 parts by mass of the acrylic copolymer.

The disclosure 26 relates to the adhesive tape according to the disclosure 20, 21, 22, 23, 24, or 25, wherein the adhesive layer further contains a tackifier resin.

The disclosure 27 relates to the adhesive tape according to the disclosure 26, wherein the tackifier resin includes at least one selected from the group consisting of a terpene phenol resin, a rosin resin, and a xylene resin.

The disclosure 28 relates to the adhesive tape according to the disclosure 26 or 27, wherein the tackifier resin is contained in an amount of 20 parts by mass or less relative to 100 parts by mass of the acrylic copolymer.

The disclosure 29 relates to the adhesive tape according to the disclosure 20, 21, 22, 23, 24, 25, 26, 27, or 28, wherein the adhesive layer has a gel fraction of 10% by mass or greater and 85% by mass or less.

The disclosure 30 relates to the adhesive tape according to the disclosure 20, 21, 22, 23, 24, 25, 26, 27, 28, or 29, wherein the adhesive layer has a thickness of 5 $\mu$m or greater and 200 $\mu$m or less.

The disclosure 31 relates to the adhesive tape according to the disclosure 20, 21, 22, 23, 24, 25, 26, 27, 28, 29, or 30, including a substrate.

The disclosure 32 relates to the adhesive tape according to the disclosure 31, wherein the substrate includes at least one selected from the group consisting of a non-woven fabric, a polyester film, a polyimide film, a polyamide film, a polyetheretherketone film, a polyphenylene ether film, and a polyphenylene sulfide film.

The disclosure 33 relates to the adhesive tape according to the disclosure 20, 21, 22, 23, 24, 25, 26, 27, 28, 29, 30, 31, or 32, wherein the adhesive tape has a total thickness of 50 $\mu$m or greater and 200 $\mu$m or less.

The disclosure 34 relates to the adhesive tape according to the disclosure 20, 21, 22, 23, 24, 25, 26, 27, 28, 29, 30, 31, 32, or 33, which is used for fixing an electronic device component or an in-vehicle component.

The disclosure 35 relates to an adhesive composition containing: an acrylic copolymer including a structural unit derived from an alkyl (meth)acrylate, a structural unit derived from an olefin copolymer having a polymerizable unsaturated double bond at an end, and a structural unit derived from a monomer containing a polar functional group; and an organic solvent, the structural unit derived from an alkyl (meth)acrylate including a structural unit derived from an alkyl (meth) acrylate containing an alcohol-derived C1-C4 alkyl group, the structural unit derived from an alkyl (meth)acrylate containing an alcohol-derived C1-C4 alkyl group being included in a proportion of 50% by mass or more and 100% by mass or less in the structural unit derived from an alkyl (meth)acrylate, the structural unit derived from an alkyl (meth) acrylate being included in a proportion of 50% by mass or more and 90% by mass or less in the acrylic copolymer, the structural unit derived from a monomer containing a polar functional group being included in a proportion of 3% by mass or more and 15% by mass or less in the acrylic copolymer, the acrylic copolymer having a weight average molecular weight of 750,000 or greater and less than 1,500,000.

The disclosure 36 relates to the adhesive composition according to the disclosure 35, wherein the structural unit derived from an alkyl (meth)acrylate includes a structural unit derived from an alkyl (meth)acrylate containing an alcohol-derived C1-C2 alkyl group, and the structural unit derived from an alkyl (meth)acrylate containing an alcohol-derived C1-C2 alkyl group is included in a proportion of 10% by mass or more and 80% by mass or less in the structural unit derived from an alkyl (meth)acrylate.

The present invention is described in detail below.

The adhesive tape according to the disclosure 1 is also referred to as "the adhesive tape of a first embodiment of the present invention". The adhesive tape according to the disclosure 20 is also referred to as "the adhesive tape of a second embodiment of the present invention". Matters common to the adhesive tape of the first embodiment of the present invention and the adhesive tape of the second embodiment of the present invention are described without specifying which adhesive tape, or such matters are described as matters for "the adhesive tape of the present invention".

The present inventors focused on an adhesive tape including an adhesive layer containing an acrylic copolymer, and considered adjusting the shear storage modulus and loss tangent of the adhesive layer under high-temperature conditions to specific ranges. As a result, the inventors found out that it is possible to obtain an adhesive tape having excellent adhesion under high-temperature conditions. Thus, the first embodiment of the present invention was completed.

The present inventors also focused on an adhesive tape including an adhesive layer, and considered incorporating a relatively high-polarity acrylic-olefin copolymer with a specific composition into the adhesive layer to improve the cohesion of the adhesive layer under high-temperature conditions. The inventors further considered incorporating a low-carbon-number alkyl acrylate and a monomer containing a polar functional group, which are relatively high-polarity monomers, at a specific proportion, as the monomers to constitute the acrylic-olefin copolymer, and also adjusting the acrylic-olefin copolymer to a specific weight average molecular weight. As a result, the inventors found out that it is possible to improve the cohesion of the adhesive layer and provide an adhesive tape having excellent adhesion under high-temperature conditions. The second embodiment of the present invention was thus completed.

The adhesive tape of the present invention includes an adhesive layer.

In the adhesive tape of the first embodiment of the present invention, the lower limit of the shear storage modulus (G') at 150°C of the adhesive layer as measured by dynamic viscoelasticity measurement at a measurement frequency of 1 Hz (hereinafter also simply referred to as "the shear storage modulus at 150°C") is $8.0 \times 10^4$ Pa, and the upper limit thereof is $3.0 \times 10^5$ Pa. When the shear storage modulus at 150°C of the adhesive layer is $8.0 \times 10^4$ Pa or greater, the cohesion of the adhesive layer at high temperature can be increased, and the adhesive tape of the first embodiment of the present invention can have excellent adhesion under high-temperature conditions.

When the shear storage modulus at 150°C of the adhesive layer is $3.0 \times 10^5$ Pa or less, the adhesive layer is not excessively hard at high temperature, and the adhesive tape of the first embodiment of the present invention can have excellent adhesion under high-temperature conditions. The lower limit of the shear storage modulus at 150°C of the adhesive layer is preferably $1.0 \times 10^5$ Pa, and the upper limit thereof is preferably $2.5 \times 10^5$ Pa. The lower limit is more preferably $1.2 \times 10^5$ Pa, and the upper limit is more preferably $2.0 \times 10^5$ Pa.

In the adhesive tape of the second embodiment of the present invention, the lower limit of the shear storage modulus at 150°C of the adhesive layer is preferably $8.0 \times 10^4$ Pa, and the upper limit thereof is preferably $3.0 \times 10^5$ Pa. When the shear storage modulus at 150°C of the adhesive layer is $8.0 \times 10^4$ Pa or greater, the cohesion of the adhesive layer at high temperature can be further increased, and the adhesive tape of the second embodiment of the present invention can have better adhesion under high-temperature conditions. When the shear storage modulus at 150°C of the adhesive layer is $3.0 \times 10^5$ Pa or less, the adhesive layer is not excessively hard at high temperature, and the adhesive tape of the second embodiment of the present invention can have better adhesion under high-temperature conditions. The lower limit of the shear storage modulus at 150°C of the adhesive layer is more preferably $1.0 \times 10^5$ Pa, and the upper limit thereof is more preferably $2.5 \times 10^5$ Pa. The lower limit is still more preferably $1.2 \times 10^5$ Pa, and the upper limit is still more preferably $2.0 \times 10^5$ Pa.

In the adhesive tape of the first embodiment of the present invention, the lower limit of the loss tangent (tanδ) at 150°C of the adhesive layer as measured by dynamic viscoelasticity measurement at a measurement frequency of 1 Hz (hereinafter also simply referred to as "the loss tangent at 150°C") is 0.10, and the upper limit thereof is 0.40. When the loss tangent at 150°C of the adhesive layer is 0.10 or greater, the adhesive layer can be flexible and easily closely adhere to an adherend. When the loss tangent at 150°C of the adhesive layer is 0.40 or less, the cohesion of the adhesive layer at high temperature can be improved, so that the adhesive layer can maintain sufficient cohesion to exhibit adhesion even under high-temperature conditions. Thus, the adhesive tape of the first embodiment of the present invention can have excellent adhesion under high-temperature conditions. The lower limit of the loss tangent at 150°C of the adhesive layer is preferably 0.12, and the upper limit thereof is preferably 0.35. The lower limit is more preferably 0.14, and the upper limit is more preferably 0.30.

In the adhesive tape of the second embodiment of the present invention, the lower limit of the loss tangent at 150°C of the adhesive layer is preferably 0.10, and the upper limit thereof is preferably 0.40. When the loss tangent at 150°C of the adhesive layer is 0.10 or greater, the adhesive layer can be more flexible and more easily closely adhere to an adherend. When the loss tangent at 150°C of the adhesive layer is 0.40 or less, the cohesion of the adhesive layer at high temperature can be further improved, so that the adhesive layer can maintain sufficient cohesion to exhibit adhesion even under high-temperature conditions. Thus, the adhesive tape of the second embodiment of the present invention can have better adhesion under high-temperature conditions. The lower limit of the loss tangent at 150°C of the adhesive layer is more preferably 0.12, and the upper limit thereof is more preferably 0.35. The lower limit is still more preferably 0.14, and the upper limit is still more preferably 0.30.

The shear storage modulus at 150°C of the adhesive layer and the loss tangent (tanδ) at 150°C of the adhesive layer can be measured by dynamic viscoelasticity measurement.

Specifically, the obtained adhesive layer is subjected to measurement of a dynamic viscoelastic spectrum using a dynamic viscoelastic analyzer (e.g., DVA-200, available from IT Keisoku Seigyo Co., Ltd.) in a nitrogen atmosphere under the conditions of a shear direction, a frequency of 1 Hz, a temperature increase rate of 5°C/min, a temperature range from -100°C to 200°C, and a strain of 0.08%, whereby the shear storage modulus at 150°C of the adhesive layer and the loss tangent (tanδ) at 150°C of the adhesive layer can be determined.

For an adhesive layer thinner than 500 μm, multiple adhesive layers are stacked to a thickness of 500 μm or greater to prepare a measurement adhesive layer for the dynamic viscoelasticity measurement.

The shear storage modulus at 150°C of the adhesive layer can be adjusted by, for example, a method of adjusting the polarity of the later-described acrylic copolymer (e.g., adjusting the proportion of the later-described alcohol-derived C1-C4 alkyl (meth)acrylate, adjusting the proportion of the structural unit derived from a monomer containing a polar functional group), a method of adjusting the molecular weight of the acrylic copolymer, or a method of adjusting the type or amount of the later-described tackifier resin, crosslinking agent, or silane coupling agent.

The loss tangent (tanδ) at 150°C of the adhesive layer can be adjusted by, for example, a method of adjusting the polarity of the later-described acrylic copolymer (e.g., adjusting the proportion of the later-described alcohol-derived C1-C4 alkyl (meth)acrylate, adjusting the proportion of the structural unit derived from a monomer containing a polar functional group), a method of adjusting the molecular weight of the acrylic copolymer, or a method of adjusting the type or amount of the later-described tackifier resin, crosslinking agent, or silane coupling agent.

The adhesive layer of the adhesive tape of the present invention contains an acrylic copolymer.

The acrylic copolymer preferably includes a structural unit derived from an alkyl (meth)acrylate.

The "(meth)acrylate" herein means acrylate or methacrylate.

In the adhesive tape of the second embodiment of the present invention, the structural unit derived from an alkyl (meth)acrylate includes a structural unit derived from an alkyl (meth)acrylate containing an alcohol-derived C1-C4 alkyl group. In the adhesive tape of the first embodiment of the present invention, the structural unit derived from an alkyl (meth) acrylate preferably includes a structural unit derived from an alkyl (meth)acrylate containing an alcohol-derived C1-C4 alkyl group. When the structural unit derived from an alkyl (meth)acrylate includes a structural unit derived from an alkyl (meth)acrylate containing an alcohol-derived C1-C4 alkyl group, the acrylic copolymer can have higher polarity, which increases the cohesion of the adhesive layer. As a result, the adhesion of the adhesive tape of the present invention can be improved. In particular, the adhesive layer can maintain sufficient cohesion to exhibit adhesion even under high-temperature conditions, and thus the adhesion of the adhesive tape of the present invention under high-temperature conditions can be improved.

The "alcohol-derived alkyl group" herein refers to an alkyl group bound to an oxygen atom of an ester bond in the alkyl (meth)acrylate.

In the adhesive tape of the second embodiment of the present invention, the lower limit of the proportion of the structural unit derived from an alkyl (meth)acrylate containing an alcohol-derived C1-C4 alkyl group in the structural unit derived from an alkyl (meth)acrylate is 50% by mass. In the adhesive tape of the first embodiment of the present invention, the lower limit of the proportion of the structural unit derived from an alkyl (meth)acrylate containing an alcohol-derived C1-C4 alkyl group in the structural unit derived from an alkyl (meth)acrylate is preferably 50% by mass. When the proportion of the structural unit derived from an alkyl (meth)acrylate containing an alcohol-derived C1-C4 alkyl group is 50% by mass or more, the acrylic copolymer can have high polarity, which increases the cohesion of the adhesive layer, resulting in improved adhesion of the adhesive tape of the present invention. In particular, the adhesive layer can maintain sufficient cohesion to exhibit adhesion even under high-temperature conditions, and thus the adhesion of the adhesive tape of the present invention under high-temperature conditions can be improved. In the adhesive tape of the second embodiment of the present invention, the lower limit of the proportion of the structural unit derived from an alkyl (meth)acrylate containing an alcohol-derived C1-C4 alkyl group is preferably 60% by mass, more preferably 70% by mass. In the adhesive tape of the first embodiment of the present invention, the lower limit of the proportion of the structural unit derived from an alkyl (meth) acrylate containing an alcohol-derived C1-C4 alkyl group is more preferably 60% by mass, still more preferably 70% by mass.

In the adhesive tape of the present invention, the upper limit of the proportion of the structural unit derived from an alkyl (meth)acrylate containing an alcohol-derived C1-C4 alkyl group may be 100% by mass, in other words, the structural unit derived from an alkyl (meth)acrylate may consist only of the structural unit derived from an alkyl (meth)acrylate containing an alcohol-derived C1-C4 alkyl group.

Examples of the alkyl (meth)acrylate containing an alcohol-derived C1-C4 alkyl group include alkyl (meth) acrylates obtained by dehydration-condensation of (meth)acrylic acid with an alcohol containing a linear or branched C 1-C4 alkyl group. Specific examples include methyl (meth)acrylate, ethyl (meth)acrylate, n-butyl (meth)acrylate, s-butyl (meth)acrylate, t-butyl (meth)acrylate, and isobutyl (meth)acrylate. In particular, from the standpoint of achieving higher polarity of the acrylic copolymer, an alkyl (meth)acrylate containing an alcohol-derived C1-C2 alkyl group is preferred. In other words, the structural unit derived from an alkyl (meth)acrylate preferably includes a structural unit derived from an alkyl (meth)acrylate containing an alcohol-derived C1-C2 alkyl group.

The lower limit of the proportion of the structural unit derived from an alkyl (meth)acrylate containing an alcohol-derived C1-C2 alkyl group in the structural unit derived from an alkyl (meth)acrylate is preferably 10% by mass, and the upper limit thereof is preferably 80% by mass. When the proportion of the structural unit derived from an alkyl (meth) acrylate containing an alcohol-derived C1-C2 alkyl group is 10% by mass or more, the acrylic copolymer can have higher polarity, which further increases the cohesion of the adhesive layer, resulting in further improved adhesion of the adhesive tape of the present invention. In particular, the adhesive layer can maintain sufficient cohesion to exhibit adhesion even under high-temperature conditions, and thus the adhesion of the adhesive tape of the present invention under high-temperature conditions can be improved. When the proportion of the structural unit derived from an alkyl (meth)acrylate containing an alcohol-derived C1-C2 alkyl group is 80% by mass or less, the later-described glass transition temperature of the acrylic copolymer can be easily adjusted to an appropriate range, and the adhesion of the adhesive tape of the present invention can be further improved. The lower limit of the proportion of the structural unit derived from an alkyl (meth)acrylate containing an alcohol-derived C1-C2 alkyl group is more preferably 30% by mass, and the upper limit thereof is more preferably 70% by mass. The lower limit is still more preferably 45% by mass, and the upper limit is still more preferably 60% by mass.

The structural unit derived from an alkyl (meth)acrylate may include a structural unit derived from an alkyl (meth) acrylate other than the structural unit derived from an alkyl (meth)acrylate containing an alcohol-derived C1-C4 alkyl group.

In the adhesive tape of the second embodiment of the present invention, the lower limit of the proportion of the structural unit derived from an alkyl (meth)acrylate in the acrylic copolymer is 50% by mass, and the upper limit thereof is 90% by mass. In the adhesive tape of the first embodiment of the present invention, the lower limit of the proportion of the structural unit derived from an alkyl (meth)acrylate in the acrylic copolymer is preferably 50% by mass, and the upper limit thereof is preferably 90% by mass. When the proportion of the structural unit derived from an alkyl (meth)acrylate is in the range, the adhesive layer can achieve both sufficient flexibility and sufficient cohesion to exhibit adhesion. In the adhesive tape of the second embodiment of the present invention, the lower limit of the proportion of the structural unit derived from an alkyl (meth)acrylate is preferably 60% by mass, and the upper limit thereof is preferably 80% by mass. The lower limit is more preferably 65% by mass, and the upper limit is more preferably 75% by mass. In the adhesive tape of the first embodiment of the present invention, the lower limit of the proportion of the structural unit derived from an alkyl (meth) acrylate is more preferably 60% by mass, and the upper limit thereof is more preferably 80% by mass. The lower limit is still more preferably 65% by mass, and the upper limit is still more preferably 75% by mass.

In the adhesive tape of the second embodiment of the present invention, the acrylic copolymer includes a structural unit derived from an olefin copolymer having a polymerizable unsaturated double bond at an end. In the adhesive tape of the first embodiment of the present invention, the acrylic copolymer preferably includes a structural unit derived from an olefin copolymer having a polymerizable unsaturated double bond at an end. When the acrylic copolymer includes a structural unit derived from an olefin copolymer having a polymerizable unsaturated double bond at an end, the structural units derived from an olefin copolymer having a polymerizable unsaturated double bond at an end interact and cohere to each other, forming pseudo-crosslinking points. With the acrylic copolymer having such a structure, the adhesive layer under low strain exhibits a hard nature like a crosslinked adhesive layer and has improved holding power. In contrast, under high strain due to peel stress, as the pseudo-crosslinking points break and cause the molecules of the acrylic copolymer to stretch, the adhesive layer exhibits a highly flexible nature and has improved adhesion. In other words, when the acrylic copolymer includes the structural unit derived from an olefin copolymer having a polymerizable unsaturated double bond at an end, the adhesion and holding power of the adhesive layer can be improved.

The olefin copolymer having a polymerizable unsaturated double bond at an end may have a polymerizable unsaturated double bond at one end or may have polymerizable unsaturated double bonds at both ends. Preferred is an olefin copolymer having a polymerizable unsaturated double bond at one end because such an olefin copolymer easily forms an appropriate number of pseudo-crosslinking points.

Examples of the olefin copolymer having a polymerizable unsaturated double bond at an end include ethylene-butylene copolymers, ethylene-propylene copolymers, ethylene polymers, propylene polymers, and butylene polymers that have at one or both ends a group having a polymerizable unsaturated double bond.

Each of these olefin copolymers having a polymerizable unsaturated double bond at an end may be used alone, or two or more of them may be used in combination.

Examples of the group having a polymerizable unsaturated double bond include a (meth)acryloyl group, a vinyl ether group, and a styryl group. Preferred among these is a (meth)acryloyl group because it has good copolymerizability with the alkyl (meth)acrylates.

The "(meth)acryloyl" herein means acryloyl or methacryloyl.

Examples of the olefin copolymer having a (meth)acryloyl group at an end include ethylene macromonomers having a (meth)acryloyl group at one end, propylene macromonomers having a (meth)acryloyl group at one end, ethylene-butylene macromonomers having a (meth)acryloyl group at one end, and ethylene-propylene macromonomers having a (meth)acryloyl group at one end. Preferred among these are ethylene-butylene macromonomers having a (meth)acryloyl group at one end and ethylene-propylene macromonomers having a (meth)acryloyl group at one end, because they make it easy to satisfy the later-described glass transition temperature, leading to further improved adhesion of the adhesive layer.

The "macromonomer" herein refers to a monomer having a weight average molecular weight of about 1,000 to 100,000 and having a polymerizable functional group.

The lower limit of the proportion of the structural unit derived from an olefin copolymer having a polymerizable unsaturated double bond at an end in the acrylic copolymer is preferably 5% by mass, and the upper limit thereof is preferably 50% by mass. When the proportion of the structural unit derived from an olefin copolymer having a polymerizable unsaturated double bond at an end is 5% by mass or more, the acrylic copolymer can form an appropriate number of pseudo-crosslinking points and further improve the adhesion and holding power of the adhesive layer. When the proportion of the structural unit derived from an olefin copolymer having a polymerizable unsaturated double bond at an end is 50% by mass or less, cohesive failure of the adhesive layer can be further reduced. The lower limit of the proportion of the structural unit derived from an olefin copolymer having a polymerizable unsaturated double bond at an end is more preferably 8% by mass, still more preferably 10% by mass, and the upper limit thereof is more preferably 30% by mass, still more preferably 27% by mass, particularly preferably 25% by mass.

In the adhesive tape of the second embodiment of the present invention, the acrylic copolymer includes a structural unit derived from a monomer containing a polar functional group. In the adhesive tape of the first embodiment of the present invention, the acrylic copolymer preferably includes a structural unit derived from a monomer containing a polar functional group. When the acrylic copolymer includes the structural unit derived from a monomer containing a polar functional group, the acrylic copolymer can have higher polarity, which further increases the cohesion of the adhesive layer, resulting in improved adhesion of the adhesive tape of the present invention. In particular, the adhesive layer can maintain sufficient cohesion to exhibit adhesion even under high-temperature conditions, and thus the adhesion of the adhesive tape of the present invention under high-temperature conditions can be improved. Moreover, in the case where the adhesive layer contains the later-described crosslinking agent, the acrylic copolymer crosslinks via the crosslinking agent, thereby improving the adhesion and holding power of the adhesive layer. Adjusting the degree of crosslinking at this time can adjust the later-described gel fraction of the adhesive layer to an appropriate range.

Examples of the monomer containing a polar functional group include a carboxy group-containing monomer, a hydroxy group-containing monomer, an amide group-containing monomer, and an amino group-containing monomer. In particular, to further improve the adhesion and holding power of the adhesive layer, the monomer containing a polar functional group preferably includes at least one selected from the group consisting of a carboxy group-containing monomer and a hydroxy group-containing monomer.

Each of these monomers containing a polar functional group may be used alone, or two or more of these may be used in combination.

Examples of the carboxy group-containing monomer include unsaturated carboxylic acids such as (meth)acrylic acid, (meth)acryloylacetic acid, (meth)acryloylpropionic acid, (meth)acryloylbutyric acid, (meth)acryloylpentanoic acid, crotonic acid, maleic acid, fumaric acid, citraconic acid, mesaconic acid, and itaconic acid.

Examples of the hydroxy group-containing monomer include 4-hydroxybutyl (meth)acrylate and 2-hydroxyethyl (meth)acrylate.

Examples of the amide group-containing monomer include N-vinyl-2-pyrrolidone, (meth)acrylamide, N,N-dimethyl(meth)acrylamide, and N-isopropyl(meth)acrylamide.

Examples of the amino group-containing monomer include (meth)acryloylmorpholine, 2-dimethylaminoethyl (meth)acrylate, and 2-diethylaminoethyl (meth)acrylate.

In the adhesive tape of the second embodiment of the present invention, the lower limit of the proportion of the structural unit derived from a monomer containing a polar functional group in the acrylic copolymer is 3% by mass, and the upper limit thereof is 15% by mass. In the adhesive tape of the first embodiment of the present invention, the lower limit of the proportion of the structural unit derived from a monomer containing a polar functional group in the acrylic copolymer is preferably 3% by mass, and the upper limit thereof is preferably 15% by mass. When the proportion of the structural unit derived from a monomer containing a polar functional group is 3% by mass or more, the acrylic copolymer can have higher polarity, which increases the cohesion of the adhesive layer, resulting in improved adhesion of the adhesive tape of the present invention. In particular, the adhesive layer can maintain sufficient cohesion to exhibit adhesion even under high-temperature conditions, and thus the adhesion of the adhesive tape of the present invention under high-temperature conditions can be improved. When the proportion of the structural unit derived from a monomer containing a polar functional group is 15% by mass or less, the adhesive layer is less likely to be excessively hard, and thus the adhesion of the adhesive tape of the present invention can be improved. In the adhesive tape of the second embodiment of the present invention, the lower limit of the proportion of the structural unit derived from a monomer containing a polar functional group is preferably 4% by mass, and the upper limit thereof is preferably 10% by mass. The lower limit is more preferably 5% by mass, and the upper limit is more preferably 7% by mass. In the adhesive tape of the first embodiment of the present invention, the lower limit of the proportion of the structural unit derived from a monomer containing a polar functional group is more preferably 4% by mass, and the upper limit thereof is more preferably 10% by mass. The lower limit is still more preferably 5% by mass, and the upper limit is still more preferably 7% by mass.

The acrylic copolymer may include a structural unit derived from a different monomer other than the structural unit derived from an alkyl (meth)acrylate, the structural unit derived from an olefin copolymer having a polymerizable unsaturated double bond at an end, and the structural unit derived from a monomer containing a polar functional group.

The glass transition temperature (Tg) of the acrylic copolymer is preferably in the range of -100°C or higher and 200°C or lower. The upper limit thereof is more preferably -20°C. When the glass transition temperature of the acrylic copolymer is -20°C or lower, the molecules of the acrylic copolymer more easily stretch, which can further improve the adhesion of the adhesive layer. The upper limit of the glass transition temperature of the acrylic copolymer is still more preferably -30°C, particularly preferably -35°C. When the adhesive layer contains multiple acrylic copolymers, all the acrylic copolymers preferably have a glass transition temperature of -20°C or lower.

The glass transition temperature of the acrylic copolymer can be measured by differential scanning calorimetry. More specifically, the glass transition temperature of the acrylic copolymer can be measured using, for example, a differential scanning calorimeter (e.g., 220C, available from Seiko Instruments Inc.) under a nitrogen atmosphere (nitrogen flow, flow rate 50 mL/min) by a method in conformity with JIS K6240:2011 at a measurement temperature from -100°C to 200°C and a temperature increase rate of 10°C/min.

The glass transition temperature of the acrylic copolymer can be adjusted by adjusting the types or amounts of the monomers as raw materials of the acrylic copolymer.

In the adhesive tape of the second embodiment of the present invention, the acrylic copolymer has a weight average molecular weight (Mw) of 750,000 or greater and less than 1,500,000. In the adhesive tape of the first embodiment of the present invention, the acrylic copolymer preferably has a weight average molecular weight (Mw) of 750,000 or greater and less than 1,500,000. When the weight average molecular weight of the acrylic copolymer is 750,000 or greater, the cohesion of the adhesive layer can be increased, and the adhesion of the adhesive tape of the present invention can be improved. In particular, the adhesive layer can maintain sufficient cohesion to exhibit adhesion even under high-temperature conditions, and the adhesion of the adhesive tape of the present invention under high-temperature conditions can be improved. When the weight average molecular weight of the acrylic copolymer is less than 1,500,000, the adhesive layer is less likely to be excessively hard, and thus the initial adhesion of the adhesive layer can be improved. In the adhesive tape of the second embodiment of the present invention, the lower limit of the weight average molecular weight of the acrylic copolymer is preferably 800,000, and the upper limit thereof is preferably 1,400,000. The lower limit is more preferably 900,000, and the upper limit is more preferably 1,200,000. In the adhesive tape of the first embodiment of the present invention, the lower limit of the weight average molecular weight of the acrylic copolymer is more preferably 800,000, and the upper limit thereof is more preferably 1,400,000. The lower limit is still more preferably 900,000, and the upper limit is still more preferably 1,200,000.

The lower limit of the ratio of the weight average molecular weight (Mw) to the number average molecular weight (Mn) (polydispersity: Mw/Mn) of the acrylic copolymer is preferably 1.0, and the upper limit thereof is preferably 6.0. When the polydispersity of the acrylic copolymer is in the range, the adhesion and holding power of the adhesive layer can be further improved. The lower limit of the polydispersity of the acrylic copolymer is more preferably 1.2, and the upper limit thereof is more preferably 5.0. The lower limit is still more preferably 1.5, and the upper limit is still more preferably 4.5.

The weight average molecular weight (Mw) and the number average molecular weight (Mn) herein refer to the weight average molecular weight in terms of standard polystyrene measured by gel permeation chromatography (GPC). Specifically, the acrylic copolymer is diluted 50-fold in tetrahydrofuran (THF). The diluted solution is passed through a filter (material: polytetrafluoroethylene, pore size: 0.2 μm). The obtained filtrate is fed to a gel permeation chromatograph (e.g., 2690 Separations Model, available from Waters Corporation), and GPC measurement is performed at a sample flow rate of 1 mL/min and a column temperature of 40°C to measure the molecular weight of the acrylic copolymer in terms of polystyrene, whereby the weight average molecular weight (Mw) and the number average molecular weight (Mn) are determined. The column may be GPC KF-806L (available from Showa Denko K.K.), for example. The detector may be a differential refractometer, for example. From the obtained weight average molecular weight (Mw) and the obtained number average molecular weight (Mn), the polydispersity (Mw/Mn) can be obtained.

The weight average molecular weight of the acrylic copolymer can be adjusted, for example, by a method of changing the polymerization temperature, a method of changing the polymerization time, a method of changing the type of the solvent used in the polymerization, a method of changing the type of a monomer, a method of changing the concentration of a monomer, or a method of adding a chain transfer agent.

The lower limit of the proportion of the acrylic copolymer in the adhesive layer is preferably 70% by mass. When the proportion of the acrylic copolymer is 70% by mass or more, the adhesion of the adhesive tape of the present invention can be further improved.

The proportion of the acrylic copolymer may be 100% by mass, but from the standpoint of adding the later-described silane coupling agent or crosslinking agent to the adhesive layer to further increase the cohesion of the adhesive layer, the upper limit of the proportion is preferably 99% by mass, more preferably 98% by mass.

The (meth)acrylic copolymer can be synthesized using a conventionally known polymerization method involving radical reaction of a monomer mixture as a raw material in the presence of a polymerization initiator. Examples of the method include solution polymerization (boiling point polymerization or constant temperature polymerization), emulsion polymerization, suspension polymerization, and bulk polymerization. Preferred among these is solution polymerization because it enables easy synthesis.

In the case that the polymerization method is solution polymerization, examples of a reaction solvent include ethyl acetate, toluene, methyl ethyl ketone, methylsulfoxide, ethanol, acetone, diethyl ether. Each of these reaction solvents may be used alone, or two or more of these may be used in combination.

Examples of the polymerization initiator include organic peroxides and azo compounds.

Examples of the organic peroxides include 1,1-bis(t-hexylperoxy)-3,3,5-trimethylcyclohexane, t-hexyl peroxypivalate, t-butyl peroxypivalate, 2,5-dimethyl-2,5-bis(2-ethylhexanoylperoxy)hexane, t-hexyl peroxy-2-ethylhexanoate, t-butyl peroxy-2-ethylhexanoate, t-butyl peroxyisobutyrate, t-butyl peroxy-3,5,5-trimethylhexanoate, and t-butyl peroxylaurate.

Examples of the azo compounds include azobisisobutyronitrile and azobiscyclohexanecarbonitrile.

Each of these polymerization initiators may be used alone, or two or more of these may be used in combination.

The adhesive layer preferably further contains a silane coupling agent. When the adhesive layer contains a silane coupling agent, condensation reaction of the hydroxy groups on the adherend surface and the silanol groups forms chemical bonds between the adherend and the adhesive layer. This particularly allows the adhesive layer to maintain sufficient interfacial interactions to exhibit adhesion even under high-temperature conditions. As a result, the adhesion of the adhesive tape of the present invention under high-temperature conditions can be further improved. The adhesion-improving effect of the silane coupling agent contained in the adhesive layer is particularly high for an adherend that has many hydroxy groups on the surface, such as glass.

As the silane coupling agent desirably forms a chemical bond with the acrylic copolymer, the silane coupling agent preferably has a reactive site that forms a chemical bond with the acrylic copolymer. Examples of the reactive site include an epoxy group, carbon-carbon double bond-containing functional groups (e.g., a vinyl group, a (meth)acryloyl group), an amino group, and a mercapto group. Preferred among these is an epoxy group because it has excellent reactivity. Herein, the carbon-carbon double bonds contained in an aromatic ring are not included in the carbon-carbon double bonds of the carbon-carbon double bond-containing functional group.

Examples of the silane coupling agent having a reactive site include vinyltrimethoxysilane, vinyltriethoxysilane, $\gamma$-methacryloxypropyltrimethoxysilane, $\gamma$-methacryloxypropylmethyldimethoxysilane, $\gamma$-glycidoxypropyltrimethoxysilane, $\gamma$-glycidoxypropylmethyldimethoxysilane, $\gamma$-glycidoxypropylmethyldiethoxysilane, $\gamma$-glycidoxypropyltriethoxysilane, 2-(3,4-epoxycyclohexyl)ethyltrimethoxysilane, $\gamma$-aminopropyltrimethoxysilane, $\gamma$-aminopropyltriethoxysilane, $\gamma$-aminopropyltrimethylmethoxysilane, N-(2-aminoethyl)3-aminopropyltriethoxysilane, N-(2-aminoethyl)3-aminopropylmethyldimethoxysilane, $\gamma$-mercaptopropyltrimethoxysilane, $\gamma$-mercaptopropyltriethoxysilane, mercaptobutyltrimethoxysilane, and $\gamma$-mercaptopropylmethyldimethoxysilane. Preferred among these are $\gamma$-glycidoxypropyltrimethoxysilane and $\gamma$-mercaptopropyltrimethoxysilane because they tend to further improve the adhesion of the resulting adhesive tape.

Each of these silane coupling agents may be used alone, or two or more of them may be used in combination.

The lower limit of the amount of the silane coupling agent relative to 100 parts by mass of the acrylic copolymer is preferably 0.1 parts by mass, and the upper limit thereof is preferably 3.0 parts by mass. When the amount of the silane coupling agent is 0.1 parts by mass or more, chemical bonds are formed between the adherend and the adhesive layer. This particularly allows the adhesive layer to maintain sufficient interfacial interactions to exhibit adhesion even under high-temperature conditions, leading to further improved adhesion of the adhesive tape of the present invention under high-temperature conditions. When the amount of the silane coupling agent is 3.0 parts by mass or less, the adhesive layer is less likely to be excessively hard, and thus the adhesion of the adhesive tape of the present invention can be further improved. The lower limit of the amount of the silane coupling agent is more preferably 0.3 parts by mass, and the upper limit thereof is more preferably 2.0 parts by mass. The lower limit is still more preferably 0.5 parts by mass, and the upper limit is still more preferably 1.0 parts by mass.

The adhesive layer preferably further contains a crosslinking agent. When the adhesive layer contains a crosslinking agent, the acrylic copolymer forms a crosslinked structure via the crosslinking agent, which further increases the cohesion of the adhesive layer, resulting in further improved adhesion of the adhesive tape of the present invention. In particular, the adhesive layer can maintain sufficient cohesion to exhibit adhesion even under high-temperature conditions, and thus the adhesion of the adhesive tape of the present invention under high-temperature conditions can be further improved. Adjusting the degree of crosslinking at this time can adjust the later-described gel fraction of the adhesive layer to an appropriate range.

Examples of the crosslinking agent include epoxy crosslinking agents and isocyanate crosslinking agents. Preferred among these are isocyanate crosslinking agents because they make it easy to adjust the later-described gel fraction of the adhesive layer to an appropriate range and can further improve the adhesion and holding power of the adhesive tape of the present invention.

The lower limit of the amount of the crosslinking agent is preferably 0.05 parts by mass, and the upper limit thereof is preferably 5.0 parts by mass, relative to 100 parts by mass of the acrylic copolymer. When the amount of the crosslinking agent is in the range, the later-described gel fraction of the adhesive layer can be easily adjusted to an appropriate range, and the adhesion and holding power of the adhesive tape can be further improved. The lower limit of the amount of the crosslinking agent is more preferably 0.1 parts by mass, and the upper limit thereof is more preferably 3.0 parts by mass.

The adhesive layer may further contain a tackifier resin. When the adhesive layer contains a tackifier resin, the adhesion of the adhesive tape of the present invention can be further improved.

Examples of the tackifier resin include terpene phenol resins, rosin resins, xylene resins, terpene resins, and petroleum resins. In particular, the tackifier resin is preferably at least one selected from the group consisting of a terpene phenol resin, a rosin resin, and a xylene resin, as they have a relatively high polarity and further enhance the interactions between the adhesive layer and the adherend.

Each of these tackifier resins may be used alone, or two or more of them may be used in combination.

Example of the terpene phenol resin include YS Polyster G150 and YS Polyster G125 (both available from Yasuhara Chemical Co., Ltd.).

Examples of the rosin resin include Super Ester A-125 (available from Arakawa Chemical Industries Ltd.).

Examples of the xylene resin include GHP-125 and GHP-150 (both available from Fudow Company Ltd.).

The upper limit of the amount of the tackifier resin relative to 100 parts by mass of the acrylic copolymer is preferably 20 parts by mass. When the amount of the tackifier resin is 20 parts by mass or less, a decrease in adhesion caused by bleeding of low-molecular components can be prevented under high-temperature conditions. The upper limit of the amount of the tackifier resin is more preferably 10 parts by mass.

The adhesive layer may contain conventionally known fine particles and additives such as inorganic fine particles, conductive fine particles, antioxidants, foaming agents, organic fillers, or inorganic fillers, if necessary.

The lower limit of the gel fraction of the adhesive layer is preferably 10% by mass, and the upper limit thereof is preferably 85% by mass. When the gel fraction of the adhesive layer is 10% by mass or greater, the cohesion of the adhesive layer can be further increased, and the adhesive tape of the present invention can have better adhesion. In particular, the adhesive layer can maintain sufficient cohesion to exhibit adhesion even under high-temperature conditions, and thus the adhesive tape of the present invention can have better adhesion under high-temperature conditions. When the gel fraction of the adhesive layer is 85% by mass or less, the adhesive layer is less likely to be excessively hard, and thus the adhesion of the adhesive tape can be further improved. The lower limit of the gel fraction of the adhesive layer is preferably 20% by mass, and the upper limit thereof is preferably 65% by mass. The lower limit is more preferably 30% by mass, and the upper limit is more preferably 50% by mass.

The gel fraction of the adhesive layer can be measured using the following method, for example.

Specifically, the adhesive tape is cut into a flat rectangular shape with a size of 50 mm $\times$ 100 mm to prepare a specimen. The specimen is immersed in tetrahydrofuran (THF) at 23°C for 24 hours, taken out of the tetrahydrofuran, and dried at 110°C for 1 hour. The mass of the specimen after being dried is measured, and the gel fraction is calculated using the following equation (1). The specimen includes no release film for protecting the adhesive layer. When the adhesive tape includes no substrate, the gel fraction is calculated with $W_0$ = 0.

$$\text{Gel fraction (\% by mass)} = 100 \times (W_2 - W_0)/(W_1 - W_0) \quad (1)$$

($W_0$: the mass of the substrate, $W_1$: the mass of the specimen before being immersed, $W_2$: the mass of the specimen after being immersed and dried)

The gel fraction of the adhesive layer can be adjusted, for example, by a method of adjusting the proportion of the structural unit derived from a monomer containing a polar functional group in the acrylic copolymer, or a method of adjusting the type or amount of the tackifier resin or the crosslinking agent.

The lower limit of the thickness of the adhesive layer is preferably 5 $\mu$m, and the upper limit thereof is preferably 200 $\mu$m. When the thickness of the adhesive layer is 5 $\mu$m or greater, the adhesion of the adhesive tape of the present invention can be further improved. When the thickness of the adhesive layer is 200 $\mu$m or less, deformation of the adhesive tape of the present invention can be suppressed, leading to further improved adhesion at high temperature. The lower limit of the thickness of the adhesive layer is more preferably 10 $\mu$m, and the upper limit thereof is more preferably 100 $\mu$m. The lower limit is still more preferably 25 $\mu$m, and the upper limit is still more preferably 50 $\mu$m.

The thickness herein can be measured using a dial thickness gauge (e.g., ABS Digimatic Indicator, available from Mitutoyo Corporation).

The adhesive tape of the present invention may be a non-supported tape including no substrate, or may be a supported tape including a substrate. In particular, the adhesive tape of the present invention preferably includes a substrate. When including a substrate, the adhesive tape of the present invention can have excellent handleability.

In the case where the adhesive tape of the present invention includes a substrate, the adhesive tape may be a one-sided adhesive tape including the adhesive layer on one side of the substrate, or may be a double-sided adhesive tape including the adhesive layers on both sides of the substrate. From the standpoint of handleability, a double-sided adhesive tape including the adhesive layers on both sides of the substrate is preferred.

Examples of the substrate include non-woven fabric substrates and film substrates.

Examples of the film substrates include polyester (PE) films, polyimide (PI) films, polyamide (PA) films, polyetheretherketone (PEEK) films, polyphenylene ether (PPE) films, polyphenylene sulfide (PPS) films, and polyethylene terephthalate (PET) films.

From the standpoint of heat resistance, the substrate is preferably at least one selected from the group consisting of a non-woven fabric, a polyester film, a polyimide film, a polyamide film, a polyetheretherketone film, a polyphenylene ether film, and a polyphenylene sulfide film.

The lower limit of the thickness of the substrate is preferably 10 $\mu$m, and the upper limit thereof is preferably 150 $\mu$m. When the thickness of the substrate is 10 $\mu$m or greater, the adhesive tape can have moderate stiffness and thus excellent handleability. When the thickness of the substrate is 150 μm or less, the adhesion of the adhesive tape of the present invention can be further improved. The lower limit of the thickness of the substrate is more preferably 20 μm, and the upper limit thereof is more preferably 100 μm. The lower limit is still more preferably 40 μm, and the upper limit is still more preferably 75 μm.

The adhesive tape of the present invention may further include a different layer as long as the effects of the present invention are not impaired.

The adhesive tape of the present invention may be produced by any method, and may be produced by a conventionally known method. For example, first, the alkyl (meth)acrylate, the monomer containing a polar functional group, the olefin copolymer having a polymerizable unsaturated double bond at an end, and if necessary other monomer(s) are copolymerized using a conventional method to give the acrylic copolymer. Next, the obtained acrylic copolymer is mixed with the silane coupling agent, the crosslinking agent, the tackifier resin, and/or other additive(s) if necessary to prepare an adhesive solution, and the adhesive solution is applied to the release-treated side of a release-treated film and dried, whereby the adhesive tape can be produced. Alternatively, the adhesive tape produced by the method above may be used as an adhesive layer and bonded to a substrate to provide a supported adhesive tape.

The lower limit of the total thickness of the adhesive tape of the present invention is preferably 50 μm, and the upper limit thereof is preferably 200 μm. When the total thickness of the adhesive tape of the present invention is 50 μm or greater, the adhesion of the adhesive tape of the present invention can be further improved. When the total thickness of the adhesive tape of the present invention is 200 μm or less, deformation of the adhesive tape of the present invention can be suppressed, leading to further improved adhesion at high temperature. The lower limit of the total thickness of the adhesive tape of the present invention is more preferably 75 μm, and the upper limit thereof is more preferably 175 μm. The lower limit is still more preferably 100 μm, and the upper limit is still more preferably 150 μm.

The adhesive tape of the present invention may be used in any applications. Since the adhesive tape has excellent adhesion even under high-temperature conditions, the adhesive tape is suitably used for fixing an electronic device component or an in-vehicle component. Specifically, for example, the adhesive tape can be suitably used for fixing components such as: a cover panel for surface protection of an electronic device; a fuel cell; an in-vehicle panel; or an in-vehicle exterior component.

The adhesive layer of the adhesive tape of the present invention can be obtained from an adhesive composition.

The present invention also encompasses an adhesive composition containing: an acrylic copolymer including a structural unit derived from an alkyl (meth)acrylate, a structural unit derived from an olefin copolymer having a polymerizable unsaturated double bond at an end, and a structural unit derived from a monomer containing a polar functional group; and an organic solvent, the structural unit derived from an alkyl (meth)acrylate including a structural unit derived from an alkyl (meth)acrylate containing an alcohol-derived C1-C4 alkyl group, the structural unit derived from an alkyl (meth)acrylate containing an alcohol-derived C1-C4 alkyl group being included in a proportion of 50% by mass or more and 100% by mass or less in the structural unit derived from an alkyl (meth)acrylate, the structural unit derived from an alkyl (meth)acrylate being included in a proportion of 50% by mass or more and 90% by mass or less in the acrylic copolymer, the structural unit derived from a monomer containing a polar functional group being included in a proportion of 3% by mass or more and 15% by mass or less in the acrylic copolymer, the acrylic copolymer having a weight average molecular weight of 750,000 or greater and less than 1,500,000.

The acrylic copolymer used in the adhesive composition of the present invention is the same as that used in the adhesive layer of the adhesive tape of the second embodiment of the present invention.

The adhesive composition of the present invention contains an organic solvent. The organic solvent contained in the adhesive composition of the present invention facilitates application of the adhesive composition of the present invention.

Specific examples of the organic solvent include benzene, toluene, xylene, tetralin, ethyl acetate, propyl acetate, isopropyl acetate, butyl acetate, and isopentyl acetate.

The adhesive composition of the present invention preferably further contains a silane coupling agent.

The silane coupling agent may be the same as that used in the adhesive layer of the adhesive tape of the present invention, for example.

The adhesive composition of the present invention preferably further contains a crosslinking agent.

The crosslinking agent may be the same as that used in the adhesive layer of the adhesive tape of the present invention, for example.

The adhesive composition of the present invention may further contain a tackifier resin.

The tackifier resin may be the same as that used in the adhesive layer of the adhesive tape of the present invention, for example.

The adhesive composition of the present invention may contain conventionally known fine particles or additives such as inorganic fine particles, conductive fine particles, antioxidants, foaming agents, organic fillers, or inorganic fillers, if necessary.

- Advantageous Effects of Invention

The present invention can provide an adhesive tape having excellent adhesion under high-temperature conditions. The present invention can also provide an adhesive composition having excellent adhesion under high-temperature conditions.

DESCRIPTION OF EMBODIMENTS

The embodiments of the present invention are more specifically described in the following with reference to examples. These examples are not intended to limit the present invention.

(Synthesis of acrylic copolymers A to X)

A reaction vessel equipped with a thermometer, a stirrer, and a condenser was charged with ethyl acetate and monomers shown in Table 1. The reaction vessel was then heated to initiate reflux. Subsequently, 0.01 parts by mass of 1,1-bis(t-hexylperoxy)-3,3,5-trimethylcyclohexane as a polymerization initiator was added to the reaction vessel to start polymerization under reflux. Then, 1,1-bis(t-hexylperoxy)-3,3,5-trimethylcyclohexane was added one hour after and two hours after the start of polymerization (0.01 parts by mass each time). Four hours after the start of polymerization, 0.05 parts by mass of t-hexyl peroxypivalate was added to continue the polymerization reaction. A total of eight hours of polymerization reaction was performed from the start of polymerization. In this manner, solutions of acrylic copolymers A to X in ethyl acetate were obtained. The molecular weight of each acrylic copolymer was adjusted by controlling the reaction solid content through an increase or decrease of the amount of ethyl acetate.

The obtained acrylic copolymer was diluted 50-fold in tetrahydrofuran (THF). The diluted solution was passed through a filter (material: polytetrafluoroethylene, pore size: 0.2 $\mu$m). The obtained filtrate (20 $\mu$L) as a sample was fed to a gel permeation chromatograph (2690 Separations Model, available from Waters Corporation). GPC measurement was performed at a sample flow rate of 1 mL/min and a column temperature of 40°C to measure the molecular weight of the acrylic copolymer in terms of polystyrene, whereby the weight average molecular weight (Mw) and the number average molecular weight (Mn) were determined, and the polydispersity (Mw/Mn) was obtained. The column was GPC KF-806L (available from Showa Denko K.K.). The detector was a differential refractometer. Table 1 shows the results.

The structural unit monomers shown in Table 1 are as follows.

· BA: n-butyl acrylate
· MA: methyl acrylate
· 2EHA: 2-ethylhexyl acrylate
· EBm: ethylene-butylene macromonomer (olefin polymer having a methacryloyl group at one end, available from Kraton Polymers Japan, HPVM-L1253, weight average molecular weight 7,000)
· AAc: acrylic acid
· 4HBA: 4-hydroxybutyl acrylate

[Table 1]

| | | A | B | C | D | E | F | G | H | I | J | K | L | M | N | O | P | Q | R | S | T | U | V | W | X |
|---|---|---|---|---|---|---|---|---|---|---|---|---|---|---|---|---|---|---|---|---|---|---|---|---|---|
| Acrylic copolymer — Structural unit monomer (% by mass) — Alkyl acrylate | BA | 68.9 | 78.9 | 58.9 | - | 68.9 | 68.9 | 61.9 | 54.9 | 49.9 | 63.9 | 58.9 | 38.9 | 33.9 | 13.9 | 8.9 | - | 78.9 | 88.9 | 33.9 | 77.9 | 59.9 | 68.9 | 68.9 | 74 |
| | MA | 5.0 | 5.0 | 5.0 | 37 | 5.0 | 5.0 | 15 | 15 | 15 | 10 | 15 | 35 | 40 | 60 | 65 | 73.9 | 15 | 5.0 | - | 5.0 | 5.0 | 5.0 | 5.0 | - |
| | 2EHA | - | - | - | 37 | - | - | - | - | - | - | - | - | - | - | - | - | - | - | 40 | - | - | - | - | - |
| Olefin copolymer having polymerizable unsaturated double bond at end | EBm | 20 | 10 | 30 | 20 | 20 | 20 | 20 | 20 | 20 | 20 | 20 | 20 | 20 | 20 | 20 | 20 | - | - | 20 | 20 | 20 | 20 | 20 | 20 |
| Monomer containing polar functional group | AAc | 6.0 | 6.0 | 6.0 | 6.0 | 6.0 | 6.0 | 3.0 | 10 | 15 | 6.0 | 6.0 | 6.0 | 6.0 | 6.0 | 6.0 | 6.0 | 6.0 | 6.0 | 6.0 | 2.0 | 20 | 6.0 | 6.0 | 6.0 |
| | 4HBA | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | - |
| Proportion of structural unit derived from alkyl acrylate containing an alcohol-derived C1-C4 alkyl group in structural unit derived from alkyl acrylate (% by mass) | | 100 | 100 | 100 | 50 | 100 | 100 | 100 | 100 | 100 | 100 | 100 | 100 | 100 | 100 | 100 | 100 | 100 | 100 | 46 | 100 | 100 | 100 | 100 | 100 |
| Proportion of structural unit derived from alkyl acrylate containing an alcohol-derived C1-C2 alkyl group in structural unit derived from alkyl acrylate (% by mass) | | 6.8 | 6.0 | 7.8 | 50 | 6.8 | 6.8 | 19.5 | 21.5 | 23.1 | 13.5 | 20.3 | 47.4 | 54.1 | 81.2 | 89.0 | 100 | 16.0 | 5.3 | 0 | 6.0 | 7.7 | 6.8 | 6.8 | 0 |
| Proportion of structural unit derived from alkyl acrylate in acrylic copolymer (% by mass) | | 73.9 | 83.9 | 63.9 | 74.0 | 73.9 | 73.9 | 76.9 | 69.9 | 64.9 | 73.9 | 73.9 | 73.9 | 73.9 | 73.9 | 73.9 | 73.9 | 93.9 | 93.9 | 73.9 | 82.9 | 64.9 | 73.9 | 73.9 | 74 |
| Total proportion of structural unit derived from monomer containing a polar functional group in acrylic copolymer (% by mass) | | 6.1 | 6.1 | 6.1 | 6.1 | 6.1 | 6.1 | 3.1 | 10.1 | 15.1 | 6.1 | 6.1 | 6.1 | 6.1 | 6.1 | 6.1 | 6.1 | 6.1 | 6.1 | 6.1 | 2.0 | 19.1 | 6.1 | 6.1 | 6.0 |
| Weight average molecular weight of acrylic copolymer (Mw) [in units of 10000] | | 95 | 95 | 95 | 95 | 80 | 140 | 95 | 95 | 95 | 95 | 95 | 95 | 95 | 95 | 95 | 95 | 160 | 95 | 95 | 95 | 95 | 70 | 160 | 70 |
| Polydispersity of acrylic copolymer (Mw/Mn) | | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 3.4 | 5.0 | 5.0 | 5.0 | 5.0 | 5.0 | 5.0 | 3.5 |

(Examples 1 to 37, 39, and 40 and Comparative Examples 1 to 9)

(1) Production of adhesive composition and adhesive tape

The components shown in Tables 2 to 5 were added to a solution of one of the acrylic copolymers shown in Table 1 in ethyl acetate to give a solution containing an adhesive composition. The solution containing the adhesive composition was sufficiently stirred to give an adhesive solution.

A 50-$\mu$m-thick polyethylene terephthalate (PET) film having one release-treated side was provided. The obtained adhesive solution was applied to the release-treated side, and dried at 110°C for five minutes to prepare a laminate sheet including an adhesive layer with a thickness shown in Tables 2 to 5 on the release-treated side of the PET film. The substrates shown in Tables 2 to 5 were provided. The obtained laminate sheet was attached to one side of the corresponding substrate such that the adhesive layer faced the substrate. Further, a laminate sheet prepared in the same manner was attached also to the other side of the substrate such that the adhesive layer faced the substrate. The resulting workpiece was aged in an environment at 40°C for 48 hours to give an adhesive tape including adhesive layers on both sides of the substrate, with the adhesive layers having the same composition and the same thickness.

(2) Gel fraction of adhesive layer

The adhesive tape was cut into a flat rectangular shape with a size of 50 mm × 100 mm to prepare a specimen. The specimen was immersed in tetrahydrofuran (THF) at 23°C for 24 hours, taken out of the tetrahydrofuran, and dried at 110°C for 1 hour. The mass of the specimen after being dried was measured, and the gel fraction was calculated using the following equation (1). The specimen included no release film for protecting the adhesive layers. Tables 2 to 5 show the results.

$$\text{Gel fraction (\% by mass)} = 100 \times (W_2 - W_0)/(W_1 - W_0) \quad (1)$$

(W$_0$: the mass of the substrate, W$_1$: the mass of the specimen before being immersed,
W$_2$: the mass of the specimen after being immersed and dried)

(3) Shear storage modulus at 150°C of adhesive layer and loss tangent at 150°C of adhesive layer

In (1) Production of adhesive tape above, the adhesive layers of the laminate sheets prepared were stacked to prepare a 500-$\mu$m-thick measurement sample consisting only of the adhesive layers. The obtained measurement sample was subjected to dynamic viscoelasticity measurement to measure a dynamic viscoelastic spectrum using a dynamic viscoelastic analyzer (DVA-200, available from IT Keisoku Seigyo Co., Ltd.) in a nitrogen atmosphere under the conditions of a shear direction, a frequency of 1 Hz, a temperature increase rate of 5°C/min, a temperature range from -100°C to 200°C, and a strain of 0.08%, whereby the shear storage modulus (Pa) at 150°C of the adhesive layers and the loss tangent at 150°C of the adhesive layers were determined. Tables 2 to 5 show the results.

(Example 38)

(1) Production of adhesive composition and adhesive tape

The components shown in Table 4 were added to a solution of the acrylic copolymer K shown in Table 1 in ethyl acetate to give a solution containing an adhesive composition. The solution containing the adhesive composition was sufficiently stirred to give an adhesive solution.

With the obtained adhesive solution, a laminate sheet including a 100-$\mu$m-thick adhesive layer was prepared as in Examples 1 to 37, 39, and 40 and Comparative Examples 1 to 9. Onto the adhesive layer of the laminate sheet prepared was placed a 50-$\mu$m-thick PET film having one release-treated side, such that the release-treated side faced the adhesive layer. Thus, an adhesive tape including no substrate was obtained.

(2) Gel fraction of adhesive layer

The gel fraction (% by mass) of the adhesive layer was obtained as in Examples 1 to 37, 39, and 40 and Comparative Examples 1 to 9. The gel fraction of the adhesive layer was calculated using the equation (1) with W$_0$ = 0. Table 4 shows the results.

(3) Shear storage modulus at 150°C of adhesive layer and loss tangent at 150°C of adhesive layer

The shear storage modulus (Pa) at 150°C of the adhesive layer and the loss tangent at 150°C of the adhesive layer were obtained as in Examples 1 to 37, 39, and 40 and Comparative Examples 1 to 9. Table 4 shows the results.

<Evaluation>

The adhesive tapes obtained in the examples and the comparative examples were evaluated as follows. Tables 2 to 5 show the results.

(Adhesion under high-temperature condition)

The adhesive tape was cut into a flat rectangular shape with a size of 25 mm × 50 mm to prepare a specimen. Subsequently, the PET release film on one side of the specimen was removed, and the exposed adhesive layer was attached to a 0.1-mm-thick SUS304 plate (washed with ethanol and then wiped dry) by moving a 2-kg hand roller back and forth once at a speed of 300 mm/min. Further, the PET release film on the other side of the specimen was removed, and the exposed adhesive layer was attached to another 0.1-mm-thick SUS304 plate (washed with ethanol and then wiped dry) by moving a 2-kg hand roller back and forth once at a speed of 300 mm/min. The resulting workpiece was left to stand at 23°C for 24 hours, whereby a measurement sample was obtained. The obtained measurement sample was subjected to a T-peel test in conformity with JIS K6854-3:1999 using a tensile tester (RTI-1310, available from A&D Company, Ltd.) at 100°C and a peel speed of 10 mm/min. The SUS304 plate (measurement side) and the adhesive tape of the measurement sample were peeled apart in the up and down directions, whereby the T-peel force at 100°C for SUS was measured.
The adhesion of the adhesive tape under high-temperature conditions was evaluated based on the obtained T-peel force at 100°C for SUS in accordance with the following criteria: a T-peel force of 20 N/25 mm or greater was rated as "o o", a T-peel force of 15 N/25 mm or greater and less than 20 N/25 mm was rated as "o", a T-peel force of 10 N/25 mm or greater and less than 15 N/25 mm was rated as "Δ", and a T-peel force of less than 10 N/25 mm was rated as "×".
The substrates shown in Tables 2 to 5 are as follows.

· PEN film: polyethylene naphthalate film (Teonex, available from Teijin Ltd.) · PI film: polyimide film (Kapton, available from Du Pont-Toray Co., Ltd.) · PEEK film: polyetheretherketone film (EXPEEK, available from Kurabo Industries Ltd.)

[Table 2]

| | | | Example | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| Adhesive layer | Acrylic copolymer | Type | A | B | C | D | E | F | G | H | I | J | K | L | M | N |
| | | Parts by mass | 100 | 100 | 100 | 100 | 100 | 100 | 100 | 100 | 100 | 100 | 100 | 100 | 100 | 100 |
| | Tackifier resin (parts by mass) | Terpene phenol resin (YS Polyster G150, Yasuhara Chemical Co., Ltd.) | - | - | - | - | - | - | - | - | - | - | - | - | - | - |
| | | Rosin resin (Super Ester A-125, Arakawa Chemical Industries Ltd.) | - | - | - | - | - | - | - | - | - | - | - | - | - | - |
| | | Xylene resin (GHP-150, Fudow Company Ltd.) | - | - | - | - | - | - | - | - | - | - | - | - | - | - |
| | Crosslinking agent (parts by mass) | Isocyanate crosslinking agent (Coronate L, Tosoh Corporation) | 0.1 | 0.1 | 0.1 | 0.1 | 0.1 | 0.1 | 0.1 | 0.1 | 0.1 | 0.1 | 0.1 | 0.1 | 0.1 | 0.1 |
| | Additive (parts by mass) | Silane coupling agent (KBM-403, Shin-Etsu Chemical Co., Ltd.) | - | - | - | - | - | - | - | - | - | - | - | - | - | - |
| | Gel fraction (% by mass) | | 50 | 50 | 50 | 50 | 50 | 50 | 50 | 50 | 50 | 50 | 50 | 50 | 50 | 50 |
| | Shear storage modulus at 150°C (Pa) | | $1.1 \times 10^5$ | $1.1 \times 10^5$ | $1.1 \times 10^5$ | $8.0 \times 10^4$ | $1.1 \times 10^5$ | $1.1 \times 10^5$ | $1.3 \times 10^5$ | $1.7 \times 10^5$ | $2.0 \times 10^5$ | $1.1 \times 10^5$ | $1.2 \times 10^5$ | $1.7 \times 10^5$ | $2.0 \times 10^5$ | $2.0 \times 10^5$ |
| | Loss tangent at 150°C | | 0.15 | 0.15 | 0.15 | 0.21 | 0.15 | 0.15 | 0.13 | 0.11 | 0.11 | 0.13 | 0.11 | 0.11 | 0.11 | 0.11 |
| | Thickness (μm) | | 50 | 50 | 50 | 50 | 50 | 50 | 50 | 50 | 50 | 50 | 50 | 50 | 50 | 50 |
| Substrate | Type | | PEN film | PEN film | PEN film | PEN film | PEN film | PEN film | PEN film | PEN film | PEN film | PEN film | PEN film | PEN film | PEN film | PEN film |
| | Thickness (μm) | | 50 | 50 | 50 | 50 | 50 | 50 | 50 | 50 | 50 | 50 | 50 | 50 | 50 | 50 |
| Total thickness of adhesive tape (μm) | | | 150 | 150 | 150 | 150 | 150 | 150 | 150 | 150 | 150 | 150 | 150 | 150 | 150 | 150 |
| Evaluation | Adhesion under high-temperature condition | T-peel test at 100°C for SUS (N/25 mm) | △ | △ | △ | △ | △ | △ | ○ | ○ | ○ | ○ | ○ | ○ | ○ | △ |

[Table 3]

| | | | Example | | | | | | | | | | | | | |
|---|---|---|---|---|---|---|---|---|---|---|---|---|---|---|---|---|
| | | | 15 | 16 | 17 | 18 | 19 | 20 | 21 | 22 | 23 | 24 | 25 | 26 | 27 |
| Adhesive layer | Acrylic copolymer | Type | O | P | K | K | K | K | K | A | A | A | A | A | A |
| | | Parts by mass | 100 | 100 | 100 | 100 | 100 | 100 | 100 | 100 | 100 | 100 | 100 | 100 | 100 |
| | Tackifier resin (parts by mass) | Terpene phenol resin (YS Polyster G150, Yasuhara Chemical Co., Ltd.) | - | - | - | - | - | - | - | 5 | 10 | 20 | 30 | - | - |
| | | Rosin resin (Super Ester A-125, Arakawa Chemical Industries Ltd.) | - | - | - | - | - | - | - | - | - | - | - | 20 | - |
| | | Xylene resin (GHP-150, Fudow Company Ltd.) | - | - | - | - | - | - | - | - | - | - | - | - | 20 |
| | Crosslinking agent (parts by mass) | Isocyanate crosslinking agent (Coronate L, Tosoh Corporation) | 0.1 | 0.1 | 0.1 | 0.1 | 0.1 | 0.1 | 0.1 | 0.1 | 0.1 | 0.1 | 0.1 | 0.1 | 0.1 |
| | Additive (parts by mass) | Silane coupling agent (KBM-403, Shin-Etsu Chemical Co., Ltd.) | - | - | 0.1 | 0.3 | 1.0 | 3.0 | 6.0 | - | - | - | - | - | - |
| | Gel fraction (% by mass) | | 50 | 50 | 45 | 50 | 50 | 50 | 50 | 50 | 50 | 50 | 50 | 50 | 50 |
| | Shear storage modulus at 150°C (Pa) | | $2.2 \times 10^5$ | $2.5 \times 10^5$ | $1.2 \times 10^5$ | $1.2 \times 10^5$ | $1.2 \times 10^5$ | $1.2 \times 10^5$ | $1.0 \times 10^5$ | $1.0 \times 10^5$ | $9.6 \times 10^4$ | $9.1 \times 10^4$ | $8.5 \times 10^4$ | $9.2 \times 10^4$ | $9.4 \times 10^4$ |
| | Loss tangent at 150°C | | 0.11 | 0.11 | 0.11 | 0.11 | 0.11 | 0.11 | 0.14 | 0.13 | 0.15 | 0.17 | 0.21 | 0.17 | 0.16 |
| | Thickness ($\mu$m) | | 50 | 50 | 50 | 50 | 50 | 50 | 50 | 50 | 50 | 50 | 50 | 50 | 50 |
| Substrate | Type | | PEN film | PEN film | PEN film | PEN film | PEN film | PEN film | PEN film | PEN film | PEN film | PEN film | PEN film | PEN film | PEN film |
| | Thickness ($\mu$m) | | 50 | 50 | 50 | 50 | 50 | 50 | 50 | 50 | 50 | 50 | 50 | 50 | 50 |
| Total thickness of adhesive tape ($\mu$m) | | | 150 | 150 | 150 | 150 | 150 | 150 | 150 | 150 | 150 | 150 | 150 | 150 | 150 |
| Evaluation | Adhesion under high-temperature condition | T-peel test at 100°C for SUS (N/25 mm) | Δ | Δ | ∞ | ∞ | ∞ | ∞ | ○ | ○ | ○ | ○ | Δ | ○ | ○ |

[Table 4]

| | | | Example | | | | | | | | | | | | | |
|---|---|---|---|---|---|---|---|---|---|---|---|---|---|---|---|---|
| | | | 28 | 29 | 30 | 31 | 32 | 33 | 34 | 35 | 36 | 37 | 38 | 39 | 40 |
| Adhesive layer | Acrylic copolymer | Type | K | K | K | K | Q | K | K | K | K | K | K | K | K |
| | | Parts by mass | 100 | 100 | 100 | 100 | 100 | 100 | 100 | 100 | 100 | 100 | 100 | 100 | 100 |
| | Tackifier resin (parts by mass) | Terpene phenol resin (YS Polyster G150, Yasuhara Chemical Co., Ltd.) | - | - | - | - | - | - | - | - | - | - | - | - | - |
| | | Rosin resin (Super Ester A-125, Arakawa Chemical Industries Ltd.) | - | - | - | - | 30 | - | - | - | - | - | - | - | - |
| | | Xylene resin (GHP-150, Fudow Company Ltd.) | - | - | - | - | - | - | - | - | - | - | - | - | - |
| | Crosslinking agent (parts by mass) | Isocyanate crosslinking agent (Coronate L, Tosoh Corporation) | 0.03 | 0.05 | 0.3 | 0.5 | 2.5 | 0.1 | 0.1 | 0.1 | 0.1 | 0.1 | 0.1 | 0.1 | 0.1 |
| | Additive (parts by mass) | Silane coupling agent (KBM-403, Shin-Etsu Chemical Co., Ltd.) | 1.0 | 1.0 | 1.0 | 1.0 | 1.0 | 1.0 | 1.0 | 1.0 | 1.0 | 1.0 | 1.0 | 1.0 | 1.0 |
| | | Gel fraction (% by mass) | 10 | 35 | 70 | 85 | 45 | 50 | 50 | 50 | 50 | 50 | 50 | 50 | 50 |
| | | Shear storage modulus at 150°C (Pa) | $1.2\times10^5$ | $1.2\times10^5$ | $1.2\times10^5$ | $1.2\times10^5$ | $8.1\times10^4$ | $1.2\times10^5$ | $1.2\times10^5$ | $1.2\times10^5$ | $1.2\times10^5$ | $1.2\times10^5$ | $1.2\times10^5$ | $1.2\times10^5$ | $1.2\times10^5$ |
| | | Loss tangent at 150°C | 0.11 | 0.11 | 0.11 | 0.11 | 0.39 | 0.11 | 0.11 | 0.11 | 0.11 | 0.11 | 0.11 | 0.11 | 0.11 |
| | | Thickness (μm) | 50 | 50 | 50 | 50 | 50 | 14 | 19 | 25 | 75 | 100 | 100 | 50 | 50 |
| Substrate | | Type | PEN film | PEN film | PEN film | PEN film | PEN film | PEN film | PEN film | PEN film | PEN film | PEN film | - | PI film | PEEK film |
| | | Thickness (μm) | 50 | 50 | 50 | 50 | 50 | 12 | 12 | 50 | 50 | 50 | - | 50 | 50 |
| | | Total thickness of adhesive tape (μm) | 150 | 150 | 150 | 150 | 150 | 40 | 50 | 100 | 200 | 250 | 100 | 150 | 150 |
| Evaluation | | Adhesion under high-temperature condition | T-peel test at 100°C for SUS (N/25 mm) | △ | ∞ | ∞ | ○ | △ | △ | ○ | ∞ | ∞ | ○ | ○ | ∞ | ∞ |

20

[Table 5]

|  |  |  | Comparative Example | | | | | | | | |
|---|---|---|---|---|---|---|---|---|---|---|---|
|  |  |  | 1 | 2 | 3 | 4 | 5 | 6 | 7 | 8 | 9 |
| Adhesive layer | Acrylic copolymer | Type | R | R | S | T | U | v | W | X | X |
|  |  | Parts by mass | 100 | 100 | 100 | 100 | 100 | 100 | 100 | 100 | 100 |
|  | Tackifier resin (parts by mass) | Terpene phenol resin (YS Polyster G150, Yasuhara Chemical Co., Ltd.) | - | - | - | - | - | - | - | 30 | 30 |
|  |  | Rosin resin (Super Ester A-125, Arakawa Chemical Industries Ltd.) | 30 | - | - | - | - | - | - | - | - |
|  |  | Xylene resin (GHP-150, Fudow Company Ltd.) | - | - | - | - | - | - | - | - | - |
|  | Crosslinking agent (parts by mass) | Isocyanate crosslinking agent (Coronate L, Tosoh Corporation) | 2.5 | 0.1 | 0.1 | 0.1 | 0.1 | 0.1 | 0.1 | - | 0.5 |
|  | Additive (parts by mass) | Silane coupling agent (KBM-403, Shin-Etsu Chemical Co., Ltd.) | 1.0 | - | - | - | - | - | - | - | - |
|  | Gel fraction (% by mass) | | 45 | 50 | 50 | 40 | 40 | 50 | 50 | 0 | 40 |
|  | Shear storage modulus at 150°C (Pa) | | $4.5 \times 10^4$ | $6.8 \times 10^4$ | $3.8 \times 10^4$ | $6.0 \times 10^4$ | $3.5 \times 10^5$ | $7.4 \times 10^4$ | $1.2 \times 10^5$ | $7.0 \times 10^4$ | $7.5 \times 10^4$ |
|  | Loss tangent at 150°C | | 0.45 | 0.42 | 0.52 | 0.33 | 0.09 | 0.31 | 0.09 | 0.21 | 0.21 |
|  | Thickness ($\mu$m) | | 50 | 50 | 50 | 50 | 50 | 50 | 50 | 50 | 50 |
| Substrate | Type | | PEN film | PEN film | PEN film | PEN film | PEN film | PEN film | PEN film | PEN film | PEN film |
|  | Thickness ($\mu$m) | | 50 | 50 | 50 | 50 | 50 | 50 | 50 | 50 | 50 |
| Total thickness of adhesive tape ($\mu$m) | | | 150 | 150 | 150 | 150 | 150 | 150 | 150 | 150 | 150 |
| Evaluation | Adhesion under high-temperature condition | T-peel test at 100°C for SUS (N/25 mm) | × | × | × | × | × | × | × | × | × |

INDUSTRIAL APPLICABILITY

The present invention can provide an adhesive tape having excellent adhesion under high-temperature conditions. The present invention can also provide an adhesive composition having excellent adhesion under high-temperature conditions.

## Claims

1. An adhesive tape comprising

   an adhesive layer,
   the adhesive layer containing an acrylic copolymer,
   the adhesive layer having a shear storage modulus at 150°C of $8.0 \times 10^4$ Pa or greater and $3.0 \times 10^5$ Pa or less as measured by dynamic viscoelasticity measurement at a measurement frequency of 1 Hz and having a loss tangent ($\tan\delta$) at 150°C of 0.10 or greater and 0.40 or less as measured by dynamic viscoelasticity measurement at a measurement frequency of 1 Hz.

2. The adhesive tape according to claim 1,

   wherein the acrylic copolymer includes a structural unit derived from an alkyl (meth)acrylate,
   the structural unit derived from an alkyl (meth)acrylate includes a structural unit derived from an alkyl (meth)acrylate containing an alcohol-derived C1-C4 alkyl group,
   the structural unit derived from an alkyl (meth)acrylate containing an alcohol-derived C1-C4 alkyl group is included in a proportion of 50% by mass or more and 100% by mass or less in the structural unit derived from an alkyl (meth)acrylate, and
   the structural unit derived from an alkyl (meth)acrylate is included in a proportion of 50% by mass or more and 90% by mass or less in the acrylic copolymer.

3. The adhesive tape according to claim 2,

   wherein the structural unit derived from an alkyl (meth)acrylate includes a structural unit derived from an alkyl (meth)acrylate containing an alcohol-derived C1-C2 alkyl group, and
   the structural unit derived from an alkyl (meth)acrylate containing an alcohol-derived C1-C2 alkyl group is included in a proportion of 10% by mass or more and 80% by mass or less in the structural unit derived from an alkyl (meth)acrylate.

4. The adhesive tape according to claim 1, 2, or 3,

   wherein the acrylic copolymer includes a structural unit derived from a monomer containing a polar functional group, and
   the structural unit derived from a monomer containing a polar functional group is included in a proportion of 3% by mass or more and 15% by mass or less in the acrylic copolymer.

5. The adhesive tape according to claim 4,
   wherein the structural unit derived from a monomer containing a polar functional group includes at least one structural unit selected from the group consisting of a structural unit derived from a carboxy group-containing monomer and a structural unit derived from a hydroxy group-containing monomer.

6. The adhesive tape according to claim 1, 2, 3, 4, or 5,
   wherein the acrylic copolymer includes a structural unit derived from an olefin copolymer having a polymerizable unsaturated double bond at an end.

7. The adhesive tape according to claim 6,
   wherein the structural unit derived from an olefin copolymer having a polymerizable unsaturated double bond at an end is included in a proportion of 5% by mass or more and 50% by mass or less in the acrylic copolymer.

8. The adhesive tape according to claim 1, 2, 3, 4, 5, 6, or 7,

wherein the acrylic copolymer has a weight average molecular weight of 750,000 or greater and less than 1,500,000.

9. The adhesive tape according to claim 1, 2, 3, 4, 5, 6, 7, or 8,
   wherein the adhesive layer further contains a silane coupling agent.

10. The adhesive tape according to claim 9,
    wherein the silane coupling agent is contained in an amount of 0.1 parts by mass or more and 3.0 parts by mass or less relative to 100 parts by mass of the acrylic copolymer.

11. The adhesive tape according to claim 1, 2, 3, 4, 5, 6, 7, 8, 9, or 10,
    wherein the adhesive layer further contains a tackifier resin.

12. The adhesive tape according to claim 11,
    wherein the tackifier resin includes at least one selected from the group consisting of a terpene phenol resin, a rosin resin, and a xylene resin.

13. The adhesive tape according to claim 11 or 12,
    wherein the tackifier resin is contained in an amount of 20 parts by mass or less relative to 100 parts by mass of the acrylic copolymer.

14. The adhesive tape according to claim 1, 2, 3, 4, 5, 6, 7, 8, 9, 10, 11, 12, or 13,
    wherein the adhesive layer has a gel fraction of 10% by mass or greater and 85% by mass or less.

15. The adhesive tape according to claim 1, 2, 3, 4, 5, 6, 7, 8, 9, 10, 11, 12, 13, or 14,
    wherein the adhesive layer has a thickness of 5 $\mu$m or greater and 200 $\mu$m or less.

16. The adhesive tape according to claim 1, 2, 3, 4, 5, 6, 7, 8, 9, 10, 11, 12, 13, 14, or 15, including a substrate.

17. The adhesive tape according to claim 16,
    wherein the substrate includes at least one selected from the group consisting of a non-woven fabric, a polyester film, a polyimide film, a polyamide film, a polyetheretherketone film, a polyphenylene ether film, and a polyphenylene sulfide film.

18. The adhesive tape according to claim 1, 2, 3, 4, 5, 6, 7, 8, 9, 10, 11, 12, 13, 14, 15, 16, or 17,
    wherein the adhesive tape has a total thickness of 50 $\mu$m or greater and 200 $\mu$m or less.

19. The adhesive tape according to claim 1, 2, 3, 4, 5, 6, 7, 8, 9, 10, 11, 12, 13, 14, 15, 16, 17, or 18, which is used for fixing an electronic device component or an in-vehicle component.

20. An adhesive tape comprising

    an adhesive layer,
    the adhesive layer containing an acrylic copolymer including a structural unit derived from an alkyl (meth)acrylate, a structural unit derived from an olefin copolymer having a polymerizable unsaturated double bond at an end, and a structural unit derived from a monomer containing a polar functional group,
    the structural unit derived from an alkyl (meth)acrylate including a structural unit derived from an alkyl (meth) acrylate containing an alcohol-derived C1-C4 alkyl group,
    the structural unit derived from an alkyl (meth)acrylate containing an alcohol-derived C1-C4 alkyl group being included in a proportion of 50% by mass or more and 100% by mass or less in the structural unit derived from an alkyl (meth)acrylate,
    the structural unit derived from an alkyl (meth)acrylate being included in a proportion of 50% by mass or more and 90% by mass or less in the acrylic copolymer,
    the structural unit derived from a monomer containing a polar functional group being included in a proportion of 3% by mass or more and 15% by mass or less in the acrylic copolymer,
    the acrylic copolymer having a weight average molecular weight of 750,000 or greater and less than 1,500,000.

21. The adhesive tape according to claim 20,

wherein the structural unit derived from an alkyl (meth)acrylate includes a structural unit derived from an alkyl (meth)acrylate containing an alcohol-derived C1-C2 alkyl group, and

the structural unit derived from an alkyl (meth)acrylate containing an alcohol-derived C1-C2 alkyl group is included in a proportion of 10% by mass or more and 80% by mass or less in the structural unit derived from an alkyl (meth)acrylate.

22. The adhesive tape according to claim 20 or 21,
wherein the structural unit derived from a monomer containing a polar functional group includes at least one selected from the group consisting of a structural unit derived from a carboxy group-containing monomer and a structural unit derived from a hydroxy group-containing monomer.

23. The adhesive tape according to claim 20, 21, or 22,
wherein the structural unit derived from an olefin copolymer having a polymerizable unsaturated double bond at an end is included in a proportion of 5% by mass or more and 50% by mass or less in the acrylic copolymer.

24. The adhesive tape according to claim 20, 21, 22, or 23,
wherein the adhesive layer further contains a silane coupling agent.

25. The adhesive tape according to claim 24,
wherein the silane coupling agent is contained in an amount of 0.1 parts by mass or more and 3.0 parts by mass or less relative to 100 parts by mass of the acrylic copolymer.

26. The adhesive tape according to claim 20, 21, 22, 23, 24, or 25,
wherein the adhesive layer further contains a tackifier resin.

27. The adhesive tape according to claim 26,
wherein the tackifier resin includes at least one selected from the group consisting of a terpene phenol resin, a rosin resin, and a xylene resin.

28. The adhesive tape according to claim 26 or 27,
wherein the tackifier resin is contained in an amount of 20 parts by mass or less relative to 100 parts by mass of the acrylic copolymer.

29. The adhesive tape according to claim 20, 21, 22, 23, 24, 25, 26, 27, or 28,
wherein the adhesive layer has a gel fraction of 10% by mass or greater and 85% by mass or less.

30. The adhesive tape according to claim 20, 21, 22, 23, 24, 25, 26, 27, 28, or 29,
wherein the adhesive layer has a thickness of 5 $\mu$m or greater and 200 $\mu$m or less.

31. The adhesive tape according to claim 20, 21, 22, 23, 24, 25, 26, 27, 28, 29, or 30, including a substrate.

32. The adhesive tape according to claim 31,
wherein the substrate includes at least one selected from the group consisting of a non-woven fabric, a polyester film, a polyimide film, a polyamide film, a polyetheretherketone film, a polyphenylene ether film, and a polyphenylene sulfide film.

33. The adhesive tape according to claim 20, 21, 22, 23, 24, 25, 26, 27, 28, 29, 30, 31, or 32,
wherein the adhesive tape has a total thickness of 50 $\mu$m or greater and 200 $\mu$m or less.

34. The adhesive tape according to claim 20, 21, 22, 23, 24, 25, 26, 27, 28, 29, 30, 31, 32, or 33, which is used for fixing an electronic device component or an in-vehicle component.

35. An adhesive composition comprising:

an acrylic copolymer including a structural unit derived from an alkyl (meth)acrylate, a structural unit derived from an olefin copolymer having a polymerizable unsaturated double bond at an end, and a structural unit derived from a monomer containing a polar functional group; and
an organic solvent,

the structural unit derived from an alkyl (meth)acrylate including a structural unit derived from an alkyl (meth) acrylate containing an alcohol-derived C1-C4 alkyl group,
the structural unit derived from an alkyl (meth)acrylate containing an alcohol-derived C1-C4 alkyl group being included in a proportion of 50% by mass or more and 100% by mass or less in the structural unit derived from an alkyl (meth)acrylate,
the structural unit derived from an alkyl (meth)acrylate being included in a proportion of 50% by mass or more and 90% by mass or less in the acrylic copolymer,
the structural unit derived from a monomer containing a polar functional group being included in a proportion of 3% by mass or more and 15% by mass or less in the acrylic copolymer,
the acrylic copolymer having a weight average molecular weight of 750,000 or greater and less than 1,500,000.

36. The adhesive composition according to claim 35,

wherein the structural unit derived from an alkyl (meth)acrylate includes a structural unit derived from an alkyl (meth)acrylate containing an alcohol-derived C1-C2 alkyl group, and
the structural unit derived from an alkyl (meth)acrylate containing an alcohol-derived C1-C2 alkyl group is included in a proportion of 10% by mass or more and 80% by mass or less in the structural unit derived from an alkyl (meth)acrylate.

# EP 4 752 184 A1

## INTERNATIONAL SEARCH REPORT

International application No.

**PCT/JP2024/025963**

### A. CLASSIFICATION OF SUBJECT MATTER

*C09J 7/38*(2018.01)i; *C09J 7/20*(2018.01)i; *C09J 11/06*(2006.01)i; *C09J 11/08*(2006.01)i; *C09J 133/00*(2006.01)i; *C09J 133/04*(2006.01)i; *C09J 133/06*(2006.01)i
FI: C09J7/38; C09J7/20; C09J11/06; C09J11/08; C09J133/00; C09J133/04; C09J133/06

According to International Patent Classification (IPC) or to both national classification and IPC

### B. FIELDS SEARCHED

Minimum documentation searched (classification system followed by classification symbols)

C09J7/38; C09J7/20; C09J11/06; C09J11/08; C09J133/00; C09J133/04; C09J133/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-171614 A (SEKISUI CHEMICAL CO., LTD.) 11 November 2022 (2022-11-11) claims, paragraphs [0001], [0005], [0028]-[0030], [0032], examples, particularly, tables 1, 3 | 20, 22-23, 26-27, 30-35 |
| A | entire text | 1-19, 21, 24-25, 28-29, 36 |
| A | JP 2017-8158 A (SEKISUI CHEMICAL CO., LTD.) 12 January 2017 (2017-01-12) entire text | 1-36 |
| P, A | WO 2023/145567 A1 (SEKISUI CHEMICAL CO., LTD.) 03 August 2023 (2023-08-03) entire text | 1-36 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 September 2024** | **01 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/025963**

| Patent document cited in search report | | | Publication date (day/month/year) | Patent family member(s) | | | Publication date (day/month/year) |
|---|---|---|---|---|---|---|---|
| JP | 2022-171614 | A | 11 November 2022 | US | 2024/0191109 | A1 | |
| | | | | No corresponding parts about acrylic copolymer 6 in table 1 and example 6 in table 3 | | | |
| | | | | US | 2024/0209240 | A1 | |
| | | | | No corresponding parts about acrylic copolymer 6 in table 1 and example 6 in table 3 | | | |
| | | | | WO | 2022/230935 | A1 | |
| | | | | WO | 2022/230936 | A1 | |
| | | | | EP | 4332192 | A1 | |
| | | | | EP | 4332193 | A1 | |
| | | | | TW | 202309115 | A | |
| | | | | TW | 202309217 | A | |
| | | | | KR | 10-2024-0004209 | A | |
| | | | | KR | 10-2024-0004208 | A | |
| | | | | CN | 116547360 | A | |
| | | | | CN | 116529336 | A | |
| JP | 2017-8158 | A | 12 January 2017 | (Family: none) | | | |
| WO | 2023/145567 | A1 | 03 August 2023 | CN | 118202014 | A | |
| | | | | TW | 202338036 | A | |

Form PCT/ISA/210 (patent family annex) (July 2022)

**EP 4 752 184 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015052050 A
- JP 2015021067 A
- JP 2015120876 A